# EUROPÄISCHE PATENTANMELDUNG

(11) **EP 4 645 277 A1**
(43) Veröffentlichungstag der Anmeldung: **05.11.2025**
(21) Anmeldenummer: 25172906.7
(22) Anmeldetag: 28.04.2025
(51) Int. Cl.: G08B 21/02, H04M 1/72424

(54) **NOTFALL- BZW. GEFAHRENMELDER**

(30) Priorität: 30.04.2024 DE 102024112089
(71) Anmelder: Vodafone GmbH, 40549 Düsseldorf (DE)
(72) Erfinder: Behrens, Falco, 60598 Frankfurt/Main (DE); Schaerfke, Tim, 42781 Haan (DE)
(74) Vertreter: Weisbrodt, Bernd

(57) **Zusammenfassung**

Die vorliegende Erfindung betrifft eine Vorrichtung zur manuellen und/oder zumindest teilautomatischen Auslösung einer Meldung eines akuten Notfalls oder einer Gefahr mittels Sprachkommunikation und/oder mittels Datenkommunikation zwischen Auslöser und hilfeleistender Stelle, wobei
in einem
wenigstens ein, vorzugsweise als Tastschalter (3, 4, 5) ausgebildetes Bedienelement (3, 4, 5) zur manuellen Auslösung einer Meldung,
ein Mikrofon (6),
einen Lautsprecher (7),
und optional eine Antenne (8) oder optional einen Antennenanschluss für eine Antenne (8)
aufweisenden

Gehäuse (2),
auf einer einteiligen Leiterplatine (9, PCB) oder einer mehrteiligen Leiterplatine (9, PCB) mit
wenigstens einem Eingang für das Mikrofon (6),
wenigstens einem Ausgang für den Lautsprecher (7),
und
optional wenigstens einem Anschluss für die optionale Antenne (8) oder den optionalen Antennenanschluss für eine Antenne (8)

eine Stromversorgungseinrichtung (10)
mit wenigstens einem wiederaufladbaren Speicher (10) für elektrische Energie zur vorzugsweise unterbrechungsfreien Stromversorgung eines auf der einteiligen oder mehrteiligen Leiterplatine (9, PCB) angeordneten Mikrocontrollers (11, QTPY)
und
Funkmodems (12) für eine Sprachkommunikation und/oder Datenkommunikation über ein Mobilfunknetz nach einem Mobilfunkstandard,
insbesondere einem Mobilfunkstandard der zweiten bis sechsten Generation (2G (GSM), 3G (UMTS), 4G (LTE), 5G, und/oder 6G),

vorgesehen ist.

## Beschreibung

Die vorliegende Erfindung betrifft eine Vorrichtung zur manuellen und/oder zumindest teilautomatischen Auslösung einer Meldung eines akuten Notfalls oder einer Gefahr mittels Sprachkommunikation und/oder mittels Datenkommunikation zwischen Auslöser und hilfeleistender Stelle, nachfolgend auch Alarmauslösevorrichtung genannt.

Im Stand der Technik sind sogenannte Notfall- und Gefahren-Systeme bzw. Notfall- und Gefahren-Reaktions-Systeme bekannt, deren Zweck es ist, im Falle eines Notfalls oder einer Gefahr möglichst unkompliziert eine Notfall- bzw. Gefahrenmeldung absetzen und schnell für Hilfe sorgen zu können. Solche Systeme werden für verschiedene Arten von Anwendungen eingesetzt, beispielsweise für Notfälle, Alarmierungen oder Hilferufe, und sind in der Regel für den Einsatz in öffentlichen Gebäuden, beispielsweise Kindergärten, Schulen, Behörden oder dergleichen Einrichtungen vorgesehen, können aber auch in nicht öffentlichen Gebäuden oder beispielsweise auf Werksgeländen zum Einsatz kommen, insbesondere um dem Schutz von Leib und Leben von Personen nachkommen und dahingehende gesetzliche Anforderungen, beispielsweise hinsichtlich Arbeitsschutz, erfüllen zu können. Dabei werden Notfall- bzw. Gefahrenmeldungen mittels Einrichtungen eines Notfall- und Gefahren-ReaktionsSystems aufgenommen und an entsprechende Hilfeleistungen bereitstellende Empfänger, beispielsweise Behörden bzw. Organisationen mit Sicherheitsaufgaben - auch BOS genannt - weitergeleitet, damit Hilfeleistungen in geeigneter Weise zur Verfügung gestellt werden können.

In der Vornorm DIN VDE V 0827 "Notfall- und Gefahren-Systeme" sind beispielsweise die Anforderungen, Aufgaben, und/oder Funktionen entsprechender Systeme skizziert bzw. beschrieben. Zur manuellen Auslösung einer Meldung eines akuten Notfalls oder einer Gefahr - nachfolgend auch Alarmmeldung genannt - dienen dabei insbesondere Notfall- und Gefahrenmelder gemäß DIN VDE V 0827-1, welche je nach Anwendung, insbesondere zur direkten Verifikation einer Alarmmeldung, eine Daten- oder Sprachkommunikation zwischen Auslöser und hilfeleistender Stelle ermöglichen können bzw. teilweise müssen.

Entsprechende Notfall- und Gefahren-Systeme bzw. Notfall- und Gefahren-Reaktions-Systeme sind in der Regel sowohl hinsichtlich der Einrichtung als auch dem Betrieb aufwändig und kostenintensiv.

Probleme sind darüber hinaus insbesondere hinsichtlich der Versorgung mit elektrischer Energie gegeben, insbesondere bei Alarmauslösevorrichtungen welche nicht an ein elektrisches Energieversorgungsnetz angeschlossen sind, beispielsweise aufgrund eines Ausfalls des Energieversorgungsnetzes bzw. der elektrischen Versorgungsleitungen oder einer nicht gegebenen Möglichkeit des Anschlusses einer Alarmauslösevorrichtung an ein Energieversorgungsnetz. Aufgrund einer begrenzten Speicherbarkeit elektrischer Energie sind auch bei beispielsweise mit Akkumulatoren oder Batterien ausgerüsteten, mitunter autark betreibbaren Alarmauslösevorrichtungen Probleme gegeben, insbesondere hinsichtlich der Betriebsdauer ohne Austausch von Batterien bzw. bezüglich der zeitlichen Intervalle zur Wiederaufladung von Akkumulatoren.

Im Stand der Technik sind zwar Alarmlösungen bekannt, welche über ein in einem Mobilfunknetz nach einem Mobilfunkstandard betreibbares Funkmodem verfügen, welches mit einem wiederaufladbaren Akkumulator mit elektrischer Energie versorgbar ist. Nachteilig bei den vorbekannten Alarmlösungen ist insbesondere, dass diese hinsichtlich des Energieverbrauchs nur einen Betrieb derselben mit einer zeitlich eingeschränkten Dauer in einem Bereich von ein paar Tagen bis Wochen zulassen. Dementsprechend müssen diese häufig Aufgeladen werden, was den Wartungsaufwand erheblich bzw. unverhältnismäßig macht. Für einen zuverlässigen Betrieb im Zusammenhang mit bzw. als Notfall- und Gefahren-Systemen bzw. Notfall- und Gefahren-Reaktions-Systemen sind diese insofern ungeeignet bzw. unzulässig. Gleiches gilt für mobilfunkgestützte Notruf- bzw. Kommunikationslösungen im Allgemeinen wie auch für ähnlich ausgeprägte Sonderlösungen, wie beispielsweise sogenannte Totmann-Schalter, IoT-Taster (IoT: Internet of Things), Seniorennotruflösungen oder dergleichen.

Problematisch bei den vorbekannten Alarmlösungen, welche über ein in einem Mobilfunknetz nach einem Mobilfunkstandard betreibbares Funkmodem verfügen, ist ferner, dass die bei diesen vorgesehenen Mikrofone bzw. Lautsprecher lediglich den von Mobilfunktelefonen verwendeten Mikrofonen bzw. Lautsprechern entsprechen, welche weniger Leistungsfähig sind, insbesondere da diese mit Leistungen, Spannungen bzw. Strömen betrieben werden müssen, die denen von Mobilfunktelefonen genügen bzw. mit den von Mobilfunktelefonen bereitgestellten Leistungen, Spannungen bzw. Strömen betrieben werden können. Gerade in unruhigen bzw. lauten Umgebungen, beispielsweise Industrieanlagen oder Fabrikationsstätten, oder in Störungsfällen sind Umgebungsgeräusche aber derart, dass diese Mikrofone bzw. Lautsprecher ungeeignet sind zuverlässig Meldungen eines akuten Notfalls oder einer Gefahr mittels Sprachkommunikation zwischen Auslöser und hilfeleistender Stelle zuverlässig und verständlich auszutauschen. Mikrofone bzw. Lautsprecher die dies könnten, weisen oftmals höhere Anforderungen im Hinblick auf Leistung, Spannung bzw. Strom auf, welche von Mobilfunktelefonen nicht bereitgestellt werden können bzw. dazu führen, dass deren zeitliche Betriebsdauer ohne Aufladung deutlich weiter reduziert ist.

Vor diesem Hintergrund liegt der vorliegenden Erfindung die Aufgabe zugrunde, die bei den im Stand der Technik bisher bekannten Lösungen gegebenen Nachteile zu beseitigen, insbesondere ohne die Zuverlässigkeit hinsichtlich der Funktionalität als Alarmmelder bzw. Alarmauslöser einzuschränken, insbesondere im Hinblick auf deren zeitliche Betriebsdauer ohne Aufladung.

Erfindungsgemäß wird diese Aufgabe gelöst durch eine insbesondere in den Ansprüchen gekennzeichnete Vorrichtung zur manuellen und/oder zumindest teilautomatischen Auslösung einer Meldung eines akuten Notfalls oder einer Gefahr mittels Sprachkommunikation und/oder mittels Datenkommunikation zwischen Auslöser und hilfeleistender Stelle.

Eine solche erfindungsgemäße Vorrichtung zur manuellen und/oder zumindest teilautomatischen Auslösung einer Meldung eines akuten Notfalls oder einer Gefahr mittels Sprachkommunikation und/oder mittels Datenkommunikation zwischen Auslöser und hilfeleistender Stelle, nachfolgend auch Alarmauslösevorrichtung genannt, sieht vorteilhafterweise vor, dass
in einem
wenigstens ein, vorzugsweise als Tastschalter ausgebildetes Bedienelement zur manuellen Auslösung einer Meldung,
ein Mikrofon,
einen Lautsprecher,
und optional eine Antenne oder optional einen Antennenanschluss für eine Antenne
aufweisenden

Gehäuse, vorzugsweise aus Metall,
auf einer einteiligen oder mehrteiligen Leiterplatine - nachfolgend auch PCB (PCB: Printed Circuit Board) genannt - mit
   wenigstens einem Eingang für das Mikrofon,
   wenigstens einem Ausgang für den Lautsprecher,
      und
   optional wenigstens einem Anschluss für die optionale Antenne oder den
   optionalen Antennenanschluss für eine Antenne
eine Stromversorgungseinrichtung
   mit wenigstens einem wiederaufladbaren Speicher für elektrische Energie zur vorzugsweise unterbrechungsfreien Stromversorgung eines auf der einteiligen oder mehrteiligen Leiterplatine angeordneten
   Mikrocontrollers
      und
   Funkmodems für eine Sprachkommunikation und/oder Datenkommunikation über ein Mobilfunknetz nach einem Mobilfunkstandard,
      insbesondere einem Mobilfunkstandard der zweiten bis sechsten
      Generation (2G (GSM), 3G (UMTS), 4G (LTE), 5G, und/oder 6G), vorgesehen ist.

Eine vorteilhafte Ausgestaltung der Erfindung sieht vor, dass eine Sprachverbindung, vorzugsweise eine gegensprechfähige Sprachverbindung ausschließlich manuell durch Betätigung des jeweiligen Tastschalters ausgelöst bzw. aufgebaut wird.

Vorteilhafterweise ist eine Datenkommunikation zur Übermittlung des genauen Standorts der Vorrichtung verwendbar.

Eine vorteilhafte Ausgestaltung der Erfindung sieht vor, dass auf der einteiligen oder mehrteiligen Leiterplatine wenigstens ein mit der Stromversorgungseinrichtung verbundender bzw. verbindbarer Spannungswandler für einen den Lautsprecher und/oder das Mikrofon mit elektrischer Energie versorgenden Verstärker und wenigstens ein mit der Stromversorgungseinrichtung verbundender bzw. verbindbarer Spannungswandler für den Mikrocontroller vorgesehen ist. Vorteilhafterweise ist auf der einteiligen oder mehrteiligen Leiterplatine wenigstens ein mit der Stromversorgungseinrichtung verbundender bzw. verbindbarer Spannungswandler für das Funkmodem vorgesehen. Eine weitere vorteilhafte Ausgestaltung der Erfindung sieht vor, dass ein Spannungswandler für den Mikrocontroller auch einen Spannungswandler für das Funkmodem bereitstellt.

Der Spannungswandler für den den Lautsprecher und/oder das Mikrofon mit elektrischer Energie versorgenden Verstärker und der Spannungswandler für den Mikrocontroller können in einer weiteren Ausgestaltung der Erfindung auch von nur einem Spannungswandler oder einer Spannungswandlungseinrichtung bereitgestellt werden, welcher bzw. welche unterschiedliche Spannungswerte für die angeschlossenen Komponenten, also einerseits Lautsprecher und Mikrofon und andererseits den Mikrocontroller, bereitstellt.

Vorteilhafterweise stellt der Spannungswandler für den den Lautsprecher und/oder das Mikrofon mit elektrischer Energie versorgenden Verstärker eine Ausgangsspannung von 5,0 Volt (5,0 V) und eine Stromstärke in einem Bereich von bis zu 2,0 Ampere (2,0 A) bereit.

Vorteilhafterweise stellt der Spannungswandler für den Mikrocontroller eine Ausgangsspannung von 5,0 Volt (5,0 V) und eine Stromstärke in einem Bereich von bis zu 0,0455 Ampere (0,0455 A) bereit.

Vorteilhafterweise stellt der Spannungswandler für das Funkmodem eine Ausgangsspannung in einem Bereich von 1,5 Volt (1,5 V) bis 5,0 Volt (5,0 V), vorzugsweise von 1,8 Volt (1,8 V) und 3,3 Volt (3,3 V), und eine Stromstärke in einem Bereich von bis zu 3,0 Ampere (3,0 A) bereit.

Eine vorteilhafte Ausgestaltung der Erfindung sieht vor, dass die Sprachkommunikation eine gegensprechfähige Sprachkommunikation ist.

Eine weitere, besonders vorteilhafte Ausgestaltung der Erfindung sieht vor, dass die Meldung eines akuten Notfalls oder einer Gefahr bzw. eine Sprachkommunikation mit einer hilfeleistenden Stelle mittels Push-to-talk over Cellular (PTToC, PoC bzw. PTT) erfolgt bzw. erfolgen kann.

Eine weitere besonders vorteilhafte Ausgestaltung der Erfindung sieht eine erfindungsgemäße Vorrichtung vor, wobei dem wenigstens einen, vorzugsweise als Tastschalter ausgebildetem Bedienelement zur manuellen Auslösung einer Meldung über einen Datenspeicher eine eindeutige, über das Mobilfunknetz anwählbare Rufnummer zugeordnet bzw. zuordbar ist, welche bei Betätigung des Bedienelements von dem Funkmodem für eine Kommunikationsverbindung genutzt ist bzw. nutzbar ist, wobei bei mehr als einem vorzugsweise als Tastschalter ausgebildetem Bedienelement zur manuellen Auslösung einer Meldung für jedes Bedienelement im Datenspeicher eine eigene eindeutige, über das Mobilfunknetz anwählbare Rufnummer zugeordnet bzw. zuordbar ist.

Vorteilhafterweise ist die eindeutige von dem Funkmodem über das Mobilfunknetz anwählbare Rufnummer im Datenspeicher individuell einstellbar bzw. vorgebbar, vorzugsweise über das Mobilfunknetz.

Vorteilhafterweise ist der Datenspeicher seitens des Mikrocontrollers und/oder seitens der einteiligen oder mehrteiligen Leiterplatine vorgesehen ist. Der Mikrocontroller kann so vorteilhafterweise den Datenspeicher nutzen und dem Funkmodem die jeweilige Rufnummer für die Kommunikationsverbindung nutzen, insbesondere die hilfeleistende Stelle kontaktieren bzw. anrufen.

Eine weitere vorteilhafte Ausgestaltung der Erfindung sieht vor, dass das Gehäuse der Vorrichtung vandalismussicher ausgebildet ist.

Vorteilhafterweise weist das Gehäuse einen IK-Stoßfestigkeitsgrad gemäß internationaler Norm IEC 62262 bzw. nach EN 62262 auf.

Vorteilhafterweise ist das Gehäuse der Vorrichtung durch Verschraubung, vorzugsweise eine von außen bzw. außerhalb des Gehäuses nicht zugängliche Verschraubung, oder eine vandalismussichere Verschraubung, oder eine Verklebung installierbar, beispielsweise an einer Wand in einem Innenbereich wie einem Gebäude oder einem Außenbereich wie einem Freigelände oder dergleichen.

Vorteilhafterweise ist das wenigstens eine Bedienelement als Vandalismustaster ausgebildet.

Vorteilhafterweise weist das wenigstens eine Bedienelement ein Leuchtmittel, vorzugsweise eine **LED,** auf. Das Leuchtmittel macht das Bedienelement besser sichtbar. Vorteilhafterweise ist das Leuchtmittel bei Dunkelheit oder vorgebbarer Umgebungslichtintensität automatisch aktiviert bzw. aktivierbar.

Eine weitere vorteilhafte Ausgestaltung der Erfindung sieht vor, dass der wenigstens eine wiederaufladbare Speicher für elektrische Energie [Akkumulator] der Stromversorgungseinrichtung mit nur einer Ladung bzw. Aufladung einen Betrieb der Vorrichtung mit einer zeitlichen Dauer von mindestens drei bis fünf Jahren ermöglicht.

Vorteilhafterweise ist der wenigstens eine wiederaufladbare Speicher für elektrische Energie der Stromversorgungseinrichtung ein sogenannter Industrieakkumulator oder ein IoT-Akkumulator. Eine bevorzugte Ausgestaltung sieht die Verwendung des folgenden wiederaufladbaren Speichers vor: Protected 3500 mAh, 10 A, 18650 Button Top Battery mit UL2054 und CB cert der Firma Liion Wholesale Batteries (USA).

Eine weitere vorteilhafte Ausgestaltung der Erfindung sieht vor, dass der wenigstens eine wiederaufladbare Speicher für elektrische Energie der Stromversorgungseinrichtung über das Mobilfunknetz überwachbar bzw. kontrollierbar ist, vorzugsweise hinsichtlich der verbleibenden Akkukapazität.

Eine weitere vorteilhafte Ausgestaltung der Erfindung sieht wenigstens eine Solarzelle bzw. ein Solarpanel zur Aufladung des wiederaufladbaren Speichers vor. Vorteilhafterweise ist die Solarzelle bzw. das Solarpanel integraler Bestandteil des Gehäuses oder an diesem anbringbar bzw. befestigbar. Eine weitere Ausgestaltung sieht seitens des Gehäuses einen Anschluss zum Verbinden mit der Solarzelle bzw. dem Solarpanel vor.

Vorteilhafterweise ist der Mikrocontroller in einem Bereitschaftsbetrieb betrieben bzw. betreibbar. Der Mikrocontroller wird bzw. ist insofern vorzugsweise konsequent in einem Stromsparmodus betrieben bzw. betreibbar.

Eine weitere Ausgestaltung der Erfindung sieht vor, dass auf der einteiligen oder mehrteiligen Leiterplatine wenigstens ein mit der Stromversorgungseinrichtung verbundender bzw. verbindbarer Rauchmelder oder ein Anschluss für einen Rauchmelder vorgesehen ist. Vorteilhafterweise ist so eine Erweiterung der Funktionalität bzw. Funktionalitäten der erfindungsgemäßen Alarmauslösevorrichtung ermöglicht.

Eine weitere vorteilhafte Ausgestaltung der Erfindung sieht vor, dass auf der einteiligen oder mehrteiligen Leiterplatine wenigstens ein mit der Stromversorgungseinrichtung verbundender bzw. verbindbarer Anschluss, vorzugsweise Klinkenanschluss, für einen Kopfhörer oder ein Headset (sogenannte Sprechgarnitur) vorgesehen ist. Vorteilhafterweise ist so eine Erweiterung der Funktionalität bzw. Funktionalitäten der erfindungsgemäßen Alarmauslösevorrichtung ermöglicht. So kann bei Bedarf oder insbesondere in lauten Umgebungen, wie beispielsweise in Werkshallen oder auf Baustellen, eine hinsichtlich der Sprachqualität verständlichere Kommunikation erfolgen. Eine vorteilhafte Ausgestaltung der Erfindung sieht vor, dass auf der einteiligen oder mehrteiligen Leiterplatine wenigstens ein mit der Stromversorgungseinrichtung verbundender bzw. verbindbarer Spannungswandler für einen den Anschluss für einen Kopfhörer oder ein Headset mit elektrischer Energie versorgenden Verstärker vorgesehen ist.

Gegenstand der vorliegenden Erfindung ist in einer bevorzugten Ausgestaltung der erfindungsgemäßen Vorrichtung vorteilhafterweise ein autarkes, das heißt insbesondere ohne Anschluss an ein Energieversorgungsnetz, langzeitnachladefreies, das heißt insbesondere mindestens 14 Tage bis mehrere Jahre, und gegensprechfähig betreibbares Kommunikationsterminal, welches vorzugsweise primär als Notrufterminal und sekundär aber auch als rudimentäre Kommunikationslösung für andere Anwendungen, wie beispielsweise einem Baustellen- oder Werkhallenbetrieb, einsetzbar ist, besonders vorzugsweise auch an Orten oder in Bereichen, wo keine Anschlussmöglichkeiten für eine Energieversorgung über ein Energieversorgungsnetz bzw. IP-Zugänge zur passiven Stromaufnahme mittels POE (POE: Power over Ethernet) vorhanden sind. Erfindungsgemäß wird vorteilhafterweise eine Endgerätelösung bereitgestellt, die über ein Mobilfunknetz funktioniert, eine vorzugsweise gegensprechfähige Zwei-Wege-Kommunikation unterstützt, langzeitnachladefrei ist und daher weitestgehend autark ist, insbesondere ohne Anschluss an ein Energieversorgungsnetzwerk und damit kabellos bzw. kabelfrei betreibbar ist.

Die Erfindung macht dabei insbesondere von der Erkenntnis Gebrauch, dass die marktüblichen Bauteile aus dem Mobilfunkendgerätebereich aufgrund unterschiedlicher Strom- und Spannungsanforderungen als auch Strom- und Spannungsbetriebsparametern in der Regel letztendlich zu einem permanenten Energieverlust insbesondere durch Kriechströme führen, der eine Batterie bzw. einen Akkumulator innerhalb kurzer Zeit entlädt. So beträgt die längste Akkulaufzeit eines üblichen gegensprechfähigen Endgerätes, wie beispielsweise bei einem Mobilfunktelefon, in der Regel etwa 14 bis 28 Tage Laufzeit bei Nichtnutzung. Größere Akkumulatoren, das heißt Akkumulatoren mit einer größeren Speicherkapazität, sind in der Regel insbesondere aufgrund der baulichen Abmessungen der handhabbaren Endgeräte und dem zur Verfügung stehenden Aufnahmeraum im Inneren der Endgeräte bzw. deren Gehäuse nicht verwendbar. Das Wechselspiel hinsichtlich einerseits Gewicht und Größe des Endgerätes und andererseits Speicherkapazität und Langzeitnachladefreiheit des Akkumulators des Endgerätes sind bei einem gut und vernünftig handzuhabenden Endgerät zu berücksichtigen. Zu große Akkumulatoren erschweren insbesondere die Handhabung von Endgeräten. Zu kleine Akkumulatoren bedingen ein häufigeres Nachladen und sind demensprechend in der Wartung und/oder dem kontrollaufwand intensiver.

Die bisher verfügbaren Kommunikationslösungen versagen in der Regel, wenn es zu einem Ausfall der Stromversorgung von Voice-over-IP-Telefonsystemen kommt oder beispielsweise aufgrund eines Hackerangriffs IT-Systeme ausfallen, da diese Lösungen auf einen Stromanschluss bzw. IP-Zugang angewiesen sind. Ähnliche bzw. vergleichbare vorbekannte mobilfunkgestützte Lösungen, wie beispielsweise sogenannte Seniorennotruflösungen, müssen selbst bei einem Akkubetrieb je nach Leistung regelmäßig, beispielsweise alle drei bis fünf Tage, nach- bzw. aufgeladen werden, was insbesondere einen hohen Wartungs- und Serviceaufwand bedeutet und auch daher viele Einsatzgebiete unmöglich bzw. weniger sinnvoll macht.

Nachteilig ist in diesem Zusammenhang ferner, dass bei den bisher bekannten Notfall- und Gefahrenmeldern das Wissen bei den Bereitstellern bzw. Anwendern im Hinblick auf deren Funktionsfähigkeit um in einer gefährlichen Notsituation helfen zu können, oftmals eingeschränkt ist. Die Unzulänglichkeiten oder das Versagen der vorhandenen Notfall- und Gefahrenmelder setzen Personen dann in einem Notfall einem hohen Risiko aus.

Eine weitere bevorzugte Ausgestaltung der Erfindung sieht vorteilhafterweise einen an einer Wand oder dergleichen montierbaren, batterie- bzw. akkubetriebenen Notfall- und Gefahrenmelder vor, der es ermöglicht, bei einem Notfall in Büroräumen z.B. die Polizei oder die Feuerwehr zu rufen. Der Notfall- und Gefahrenmelder soll insbesondere über drei Drucktasten verfügen, die vorteilhafterweise für verschiedene Notdienste vorgesehen sind, um dabei beispielsweise einen Missbrauch durch das Anwählen anderer Rufnummern zu verhindern, und die vom Anwender des Notfall- und Gefahrenmelders vorteilhafterweise selbst konfiguriert werden können. Die Aktivierung eines Notfalls erfolgt über eine der drei Drucktasten, die eine Benachrichtigung und einen Anruf an die zuvor programmierten Telefonnummern auslösen kann. Gleichzeitig stellt der erfindungsgemäße Notfall- und Gefahrenmelder während des Notfalls vorteilhafterweise eine gegensprechfähige Zwei-Wege-Kommunikation mittels Mobilfunk bereit, vorzugsweise mittels Push-to-talk over Cellular PTToC, Poc bzw. PTT, und gewährleistet so eine schnelle, zuverlässigere, unabhängige und überall verfügbare Verbindung und Kommunikation. Das bei dem erfindungsgemäßen Notfall- und Gefahrenmelder vorgesehene Funkmodem sucht vorteilhafterweise insbesondere nach einer besseren bzw. optimaleren Verbindung und stellt den Anruf her.

Der erfindungsgemäße Notfall- und Gefahrenmelder ist vorteilhafterweise batterie- bzw. akkubetrieben und sein Batterie- bzw. Akkustand kann insbesondere über ein sogenanntes Dashboard über das Internet ständig überwacht werden, insbesondere um die Zuverlässigkeit im Notfall zu gewährleisten. Wesentlich dafür ist insbesondere eine zuverlässige Stromversorgung über eine vorzugsweise lange bis sehr lange Zeitdauer, besonders bevorzugt von mindestens einem Jahr, vorzugsweise drei bis fünf Jahren, welche sich bei der erfindungsgemäßen Kombination der miteinander wechselwirkenden Komponenten insbesondere in der nachfolgenden Merkmalskombination überraschend als insgesamt besonders sehr stromsparend erwiesen hat:
Vorrichtung zur manuellen und/oder zumindest teilautomatischen Auslösung einer Meldung eines akuten Notfalls oder einer Gefahr mittels Sprachkommunikation und/oder mittels Datenkommunikation zwischen Auslöser und hilfeleistender Stelle,
wobei
in einem
   wenigstens ein, vorzugsweise als Tastschalter ausgebildetes Bedienelement zur manuellen Auslösung einer Meldung,
   ein Mikrofon,
   einen Lautsprecher,
   und optional eine Antenne oder optional einen Antennenanschluss für eine Antenne
   aufweisenden
Gehäuse, vorzugsweise aus Metall,
auf einer einteiligen Leiterplatine (PCB) oder einer mehrteiligen Leiterplatine (PCB) mit
   wenigstens einem Eingang für das Mikrofon,
   wenigstens einem Ausgang für den Lautsprecher,
      und
   optional wenigstens einem Anschluss für die optionale Antenne oder den
   optionalen Antennenanschluss für eine Antenne
eine Stromversorgungseinrichtung
   mit wenigstens einem wiederaufladbaren Speicher für elektrische Energie zur unterbrechungsfreien Stromversorgung eines auf der einteiligen oder mehrteiligen Leiterplatine (PCB) angeordneten
   Mikrocontrollers
      und
   Funkmodems für eine Sprachkommunikation und/oder Datenkommunikation über ein Mobilfunknetz nach einem Mobilfunkstandard,
      insbesondere einem Mobilfunkstandard der zweiten bis sechsten
      Generation (2G (GSM), 3G (UMTS), 4G (LTE), 5G, und/oder 6G), vorgesehen ist,
wobei für eine Sprachkommunikation eine gegensprechfähige Sprachverbindung ausschließlich manuell durch Betätigung des wenigstens einen, vorzugsweise als Tastschalter ausgebildeten Bedienelementes ausgelöst bzw. aufgebaut wird,
wobei auf der einteiligen oder mehrteiligen Leiterplatine (PCB)
wenigstens ein mit der Stromversorgungseinrichtung verbundender bzw. verbindbarer Spannungswandler für einen den Lautsprecher und/oder das Mikrofon mit elektrischer Energie versorgenden Verstärker (Amp), wenigstens ein mit der Stromversorgungseinrichtung verbundender bzw. verbindbarer Spannungswandler für den Mikrocontroller,
   und
wenigstens ein mit der Stromversorgungseinrichtung verbundender bzw. verbindbarer Spannungswandler für das Funkmodem
vorgesehen ist,
wobei der Spannungswandler für den den Lautsprecher und/oder das Mikrofon mit elektrischer Energie versorgenden Verstärker (Amp) eine Ausgangsspannung von 5,0 Volt und eine Stromstärke in einem Bereich von bis zu 2,0 Ampere bereitstellt,
wobei der Spannungswandler für den Mikrocontroller eine Ausgangsspannung von 5,0 Volt und eine Stromstärke in einem Bereich von bis zu 0,0455 Ampere bereitstellt, und
wobei der Spannungswandler für das Funkmodem eine Ausgangsspannung in einem Bereich von 1,5 Volt bis 5,0 Volt, vorzugsweise von 1,8 Volt und 3,3 Volt, und eine Stromstärke in einem Bereich von bis zu 3,0 Ampere bereitstellt,
wobei der wenigstens eine wiederaufladbare Speicher (10) für elektrische Energie der Stromversorgungseinrichtung (10) ein sogenannter Industrieakkumulator oder ein IoT-Akkumulator ist,
der mit nur einer Ladung bzw. Aufladung einen Betrieb der Vorrichtung mit einer zeitlichen Dauer von mindestens drei bis fünf Jahren ermöglicht,
wobei der Mikrocontroller in einem Bereitschaftsbetrieb konsequent in einem Stromsparmodus betrieben bzw. betreibbar ist.

Wie vorstehend bereits ausgeführt, weisen Mikrofon- und Lautsprecherplatinen von Mobilfunktelefonen eine andere Strom- und Spannungsparameter auf, beispielsweise eine Betriebsspannung von etwa 3,3 V, während die Strom- und Spannungsparameter der Betriebsplatine insbesondere für Grundfunktionen wie Tastatur bzw. Tastenfeld, Bildschirm, Empfangs- und Sendeeinheit in der Regel für eine Betriebsspannung von etwa 5,0 V realisiert und nutzbar sind. Bei vorbekannten Notfall- und Gefahrenmeldern führt dies in der Regel zu einer starken Reduzierung von deren zeitlicher Betriebsdauer ohne Aufladung. In der Praxis hat sich gezeigt, dass dies auch der Fall ist, wenn die vorbekannten Notfall- und Gefahrenmelder in einem sogenannten "Energiesparmodus" oder Niederenergiemodus betrieben werden. Aufgrund der unterschiedlichen Anforderungen im Hinblick auf Leistung, Spannung bzw. Strom der Komponenten vorbekannter Notfall- und Gefahrenmelder sind unkontrollierbare und unerwünschte Stromflüsse, sogenannte Kriechströme, gegeben, die die mögliche Betriebsdauer eines Akkumulators mit nur einer Ladung bzw. Aufladung deutlich reduzieren und dabei bedauerlicherweise auch nicht kalkulierbar bzw. vorhersehbar sind.

Erfindungsgemäß ist ein einfach handzuhabendes und zumindest bis zur Installation beispielsweise an einer Wand in einem Innenbereich wie einem Gebäude oder einem Außenbereich wie einem Freigelände oder dergleichen hochportables Endgerät bereitgestellt, welches alle Komponenten und/oder Bauteile einschließlich Akkumulator in nur einem Gehäuse aufweist.

Weitere Einzelheiten, Merkmale und/oder Vorteile der Erfindung werden nachfolgend anhand der in den Figuren der Zeichnungen dargestellten Ausführungsbeispiele näher erläutert.

Dabei zeigen:
- Fig. 1: in einer Draufsicht ein Ausführungsbeispiel einer erfindungsgemäßen Alarmauslösevorrichtung; und
- Fig. 2: in einer schematischen Darstellung ein prinzipielles Ausführungsbeispiel einer Leiterplatine einer erfindungsgemäßen Alarmauslösevorrichtung mit den darauf angeordneten Komponenten und deren Verschaltungen.

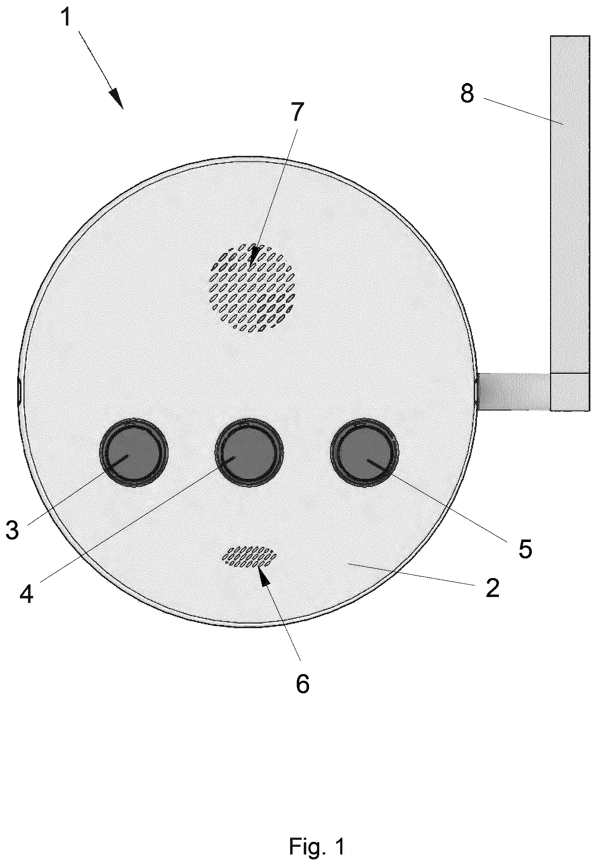

Fig. 1 zeigt in einer Draufsicht ein Ausführungsbeispiel einer erfindungsgemäßen Alarmauslösevorrichtung 1. Die Alarmauslösevorrichtung 1 weist ein vorliegend in der Draufsicht ein kreisförmiges Gehäuse 2, vorzugsweise aus Metall, auf, welches drei in der Kreisfläche nebeneinander und voneinander beabstandet angeordnete Tastschalter 3, 4 und 5, darunter angeordnet ein Mikrofon 6 bzw. Aussparungen für ein darunter, also im Gehäuse 2, angeordnetes Mikrofon 6, und oberhalb der drei Tastschalter 3, 4 und 5 einen Lautsprecher 7 bzw. Aussparungen für einen darunter, also im Gehäuse 2, angeordneten Lautsprecher 7, und eine an einer bzw. der Seitenwand des Gehäuses 2 vorgesehenen Antenne 8, vorliegend eine verschwenkbare und/oder drehbare Stabantenne 8, auf. Andere Formen des Gehäuses 2 sind erfindungsgemäß möglich, beispielsweise rechteckförmige oder quadratische Gehäuse 2.

Das Gehäuse 2 ist vandalismussicher ausgebildet und weist einen IK-Stoßfestigkeitsgrad gemäß internationaler Norm IEC 62262 bzw. nach EN 62262 auf. Das Gehäuse 2 ist durch Verschraubung, vorzugsweise eine von außen bzw. außerhalb des Gehäuses 2 nicht zugängliche Verschraubung, oder eine vandalismussichere Verschraubung, oder eine Verklebung, beispielsweise an einer Wand in einem Innenbereich wie einem Gebäude oder einem Außenbereich wie einem Freigelände oder dergleichen, installierbar. Vorteilhafterweise ist es ferner vorgesehen, die Bedienelemente bzw. Tastschalter 3, 4 und 5 als sogenannte Vandalismustaster auszubilden. Darüber hinaus ist es möglich, dass die Bedienelemente bzw. Tastschalter 3, 4 und 5 jeweils ein Leuchtmittel oder ein gemeinsames Leuchtmittel, vorzugsweise eine LED, aufweisen, welches vorzugsweise bei Dunkelheit oder vorgebbarer Umgebungslichtintensität automatisch aktiviert bzw. aktivierbar ist, insbesondere um die Sichtbarkeit der Bedienelemente bzw. Tastschalter 3, 4 und 5 zu erhöhen.

In dem Gehäuse 2 ist eine einteilige Leiterplatine 9, vorliegend ein sogenanntes PCB (PCB: Printed Circuit Board) angeordnet. Auf der Leiterplatine 9 sind ein Eingang für das Mikrofon 6, ein Ausgang für den Lautsprecher 7, ein Anschluss für die sich außerhalb des Gehäuses 2 am Gehäuse 2 angeordnete Antenne 8 und eine Stromversorgungseinrichtung 10 mit wenigstens einem wiederaufladbaren Speicher für elektrische Energie, vorliegend einem Akkumulator 10, ein Mikrocontroller (QTPY) 11 und ein Funkmodem 12 für eine Sprachkommunikation und/oder Datenkommunikation über ein Mobilfunknetz nach einem Mobilfunkstandard, insbesondere einem Mobilfunkstandard der zweiten bis sechsten Generation (2G (GSM), 3G (UMTS), 4G (LTE), 5G, und/oder 6G), vorgesehen. Bei dem sich auf der Leiterplatine (PCB) 9 befindenden Funkmodem 12 handelt sich vorliegend vorzugsweise um das Quectel Modem EC21. Das EC21 ist ein LTE Cat 1 Modem, was die stromsparendste Modemkategorie für LTE ist. Zudem ist das EC21 auch noch GSM-fähig. Anstelle des EC21 können erfindungsgemäß aber auch andere entsprechend stromsparend betreibbare Funkmodems zum Einsatz kommen.

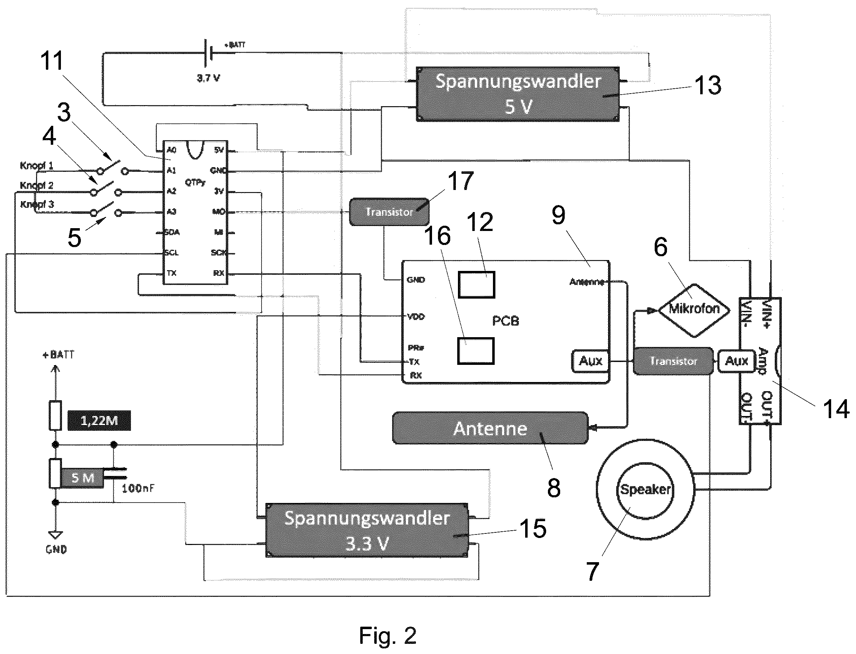

Fig. 2 zeigt die Komponenten auf der im Gehäuse 2 angeordneten Leiterplatine 9 und deren Verschaltungen. Die Stromversorgungseinrichtung 10 bzw. der Akkumulator 10 derselben ist zur vorzugsweise unterbrechungsfreien Stromversorgung des auf der Leiterplatine (PCB) 9 angeordneten Mikrocontrollers (QTPY) 11 und des Funkmodems 12 ausgebildet bzw. eingerichtet.

Um die unterschiedlichen Erfordernisse hinsichtlich der Energieversorgung, insbesondere im Hinblick auf die jeweilige Leistung, Spannung bzw. Strom, des Mikrocontrollers (QTPY) 11, Funkmodems 12, Mikrofons 6 und Lautsprechers 7 erfüllen zu können und dabei gleichzeitig die Kapazität des Akkumulators 10 effizient und mit zeitlich hoher Betriebsdauer ohne Aufladung des Akkumulators 10 erfüllen zu können, sind auf der Leiterplatine (PCB) 9 ferner ein mit der Stromversorgungseinrichtung 10 verbundender bzw. verbindbarer Spannungswandler 13 für einen den Lautsprecher 7 und das Mikrofon 6 mit elektrischer Energie versorgenden Verstärker (Amp) 14 und ein mit der Stromversorgungseinrichtung 10 verbundender bzw. verbindbarer Spannungswandler 15 für den Mikrocontroller (QTPY) 11 vorgesehen. Auf der Leiterplatine (PCB) 9 ist ein mit der Stromversorgungseinrichtung verbundender bzw. verbindbarer Spannungswandler für das Funkmodem vorgesehen, welcher eine Ausgangsspannung von 1,8 Volt (1,8 V) und 3,3 Volt (3,3 V) für das Funkmodem 12 bereitstellt.

Um die zeitliche Betriebsdauer der Alarmauslösevorrichtung 1 ohne erforderliche Aufladung des Akkumulators 10 der Stromversorgungseinrichtung 10 weiter zu erhöhen, ist dieser ausgebildet und/oder eingerichtet mit nur einer Ladung bzw. Aufladung einen Betrieb derselben mit einer zeitlichen Dauer von mindestens drei bis fünf Jahren zu ermöglichen. Vorteilhafterweise ist der Akkumulator 10 der Stromversorgungseinrichtung 10 ein sogenannter Industrieakkumulator oder ein IoT-Akkumulator. Zur Verbesserung der Zuverlässigkeit des Betriebs der Alarmauslösevorrichtung 1 ist der Akkumulator 10 der Stromversorgungseinrichtung 10 über das Mobilfunknetz überwachbar, vorzugsweise hinsichtlich Betriebsstatus und verfügbare Speicherkapazität bzw. Akkukapazität. Vorteilhafterweise ist dazu erfindungsgemäß ein sogenanntes Dashboard vorgesehen, mit welchem insbesondere eine Unterschreitung einer bestimmten verbleibenden Akkukapazität überwacht werden kann. Vorteilhafterweise kann vorgesehen sein, bei einer Unterschreitung einer bestimmten verbleibenden Akkukapazität eine Benachrichtigung über das Mobilfunknetz an eine Überwachungseinrichtung zu versenden. Vorteilhafterweise ist über das Dashboard einstellbar bzw. vorgebbar, beispielsweise über entsprechende Schaltflächen seitens des Dashboards einschaltbar, dass eine entsprechende Benachrichtigung über das Mobilfunknetz absetzbar ist. Zur weiteren Verbesserung bzw. Erhöhung der zeitlichen Betriebsdauer der Alarmauslösevorrichtung 1 ohne erforderliche Aufladung des Akkumulators 10 der Stromversorgungseinrichtung 10 ist der Mikrocontroller (QTPY) 11 in einem Bereitschaftsbetrieb, also in einem sogenannten Stromsparmodus betrieben bzw. betreibbar. Vorteilhafterweise ist vorgesehen, dass der Akkumulator 10 der Stromversorgungseinrichtung 10 seinen Akkustatus einmal am Tag über das Mobilfunknetz an eine dazu eingerichtete Überwachungseinrichtung sendet. Dies wird vorteilhafterweise mittels eines Zeitgebers (Timers) realisiert, welcher seitens der Leiterplatine 9 vorgesehen bzw. implementiert ist.

Die Alarmauslösevorrichtung 1 ist vorteilhafterweise eingerichtet bzw. ausgebildet die Meldung eines akuten Notfalls oder einer Gefahr bzw. eine Sprachkommunikation mit einer hilfeleistenden Stelle mittels Push-to-talk over Cellular (PTToC, PoC bzw. PTT) auszuführen. Dazu sind den die Bedienelementen bzw. Tastschaltern 3, 4 und 5 zur manuellen Auslösung einer Meldung über einen Datenspeicher 16 jeweils eine eindeutige, über das Mobilfunknetz anwählbare Rufnummer zugeordnet bzw. zuordbar. Der Datenspeicher 16 wird vorliegend vorteilhafterweise von dem Mikrocontroller 11 bereitgestellt bzw. wird dafür der Speicher des Mikrocontroller 11 verwendet. Bei Betätigung eines Bedienelements bzw. Tastschalters 3, 4, 5 wird die jeweilige Rufnummer aus dem Datenspeicher 16 ausgelesen und von dem Funkmodem 12 für eine Kommunikationsverbindung genutzt. Die in dem Datenspeicher 16 hinterlegte bzw., hinterlegbare Rufnummer ist vorteilhafterweise individuell einstellbar bzw. vorgebbar, vorzugsweise über das Mobilfunknetz, beispielsweise mittels einer graphischen Benutzerschnittstelle über eine dazu eingerichtete Plattform oder dergleichen.

Anhand von Fig. 2 ist eine vorteilhafte Funktionsweise der Alarmauslösevorrichtung 1 insbesondere wie folgt gegeben:
Der Mikrocontroller 11 ist konsequent in einem Bereitschafts- bzw. Stromsparmodus betrieben. Eine Ausnahme dazu ist, wenn er einmal am Tag seinen Akkustatus sendet. Dazu wird ein Zeitgeber verwendet, vorzugsweise ein 24-Stunden-Timer, der während des Stromsparmodus läuft und den Mikrocontroller aus diesem Modus nach Ablauf des Zeitgebers herausholt, also den Stromsparmodus beendet. Der Stromsparmodus wird ferner beendet, wenn einer der drei Tastschalter 3, 4, 5 betätigt wird.

Bevor der Status bzw. Statusdaten des Akkumulators 10 der Stromversorgungseinrichtung 10 über das Mobilfunknetz an eine Überwachungseinrichtung gesendet wird bzw. werden, schaltet der Mikrocontroller 11 den Pin MO von 0 Volt (0 V) auf 3,3 Volt (3,3 V), um die Stromzufuhr zum Funkmodem 12 mithilfe eines Transistors 17 zu ermöglichen. In Fig. 2 befindet sich das Funkmodem auf dem der Leiterplatine (PCB) 9. Anschließend daran wird mittels des Funkmodems 12 eine Kommunikationsverbindung über das Mobilfunknetz aufgebaut, beispielsweise mittels GSM oder LTE, und die Statusdaten werden über das Mobilfunknetz versendet.

Das Betätigen eines der Tastschalter 3, 4, 5 führt zu einer steigenden Flanke an einem der Pins (in Fig. 2 A1, A2, A3) am Mikrocontroller 11, wodurch dieser durch ein Interrupt aus dem Stromsparmodus geholt wird. Als nächstes stellt der Mikrocontroller 11 durch setzen der Pins MO und SCL, sowie mithilfe von Transistoren die Stromzufuhr des Funkmodems 12 als auch die des Verstärkers 14 her. Basierend auf dem entsprechend betätigtem Tastschalter 3, 4 bzw. 5 wird dann die jeweilige Rufnummer mithilfe des Mobilfunknetzes angerufen.

Die in den Figuren der Zeichnung dargestellten Ausführungsbeispiele und die im Zusammenhang mit diesen erläuterten Ausführungsbeispiele dienen lediglich einer Erläuterung der Erfindung und sind für die nicht beschränkend.

### Bezugszeichenliste:

- 1: Vorrichtung/Alarmauslösevorrichtung
- 2: Gehäuse
- 3: Bedienelement/Tastschalter
- 4: Bedienelement/Tastschalter
- 5: Bedienelement/Tastschalter
- 6: Mikrofon
- 7: Lautsprecher
- 8: Antenne/Stabantenne
- 9: Leiterplatine/PCB (PCB: Printed Circuit Board)
- 10: Stromversorgungseinrichtung/Akkumulator
- 11: Mikrocontroller (QTPY)
- 12: Funkmodem
- 13: Spannungswandler (Verstärker (14))
- 14: Verstärker/Amp (Mikrofon (6), Lautsprecher (7))
- 15: Spannungswandler (Mikrocontroller (11))
- 16: Datenspeicher
- 17: Transistor

## Patentansprüche

1. Vorrichtung (1) zur manuellen und/oder zumindest teilautomatischen Auslösung einer Meldung eines akuten Notfalls oder einer Gefahr mittels Sprachkommunikation und/oder mittels Datenkommunikation zwischen Auslöser und hilfeleistender Stelle,
wobei
in einem
wenigstens ein, vorzugsweise als Tastschalter (3, 4, 5) ausgebildetes Bedienelement (3, 4, 5) zur manuellen Auslösung einer Meldung,
ein Mikrofon (6),
einen Lautsprecher (7),
und optional eine Antenne (8) oder optional einen Antennenanschluss für eine Antenne (8)
aufweisenden
Gehäuse (2), vorzugsweise aus Metall,
auf einer einteiligen Leiterplatine (9, PCB) oder einer mehrteiligen Leiterplatine (PCB) mit
wenigstens einem Eingang für das Mikrofon (6),
wenigstens einem Ausgang für den Lautsprecher (7),
und
optional wenigstens einem Anschluss für die optionale Antenne (8) oder
den optionalen Antennenanschluss für eine Antenne (8)
eine Stromversorgungseinrichtung (10)
mit wenigstens einem wiederaufladbaren Speicher für elektrische Energie (10)
zur vorzugsweise unterbrechungsfreien Stromversorgung eines auf der einteiligen oder mehrteiligen Leiterplatine (9, PCB) angeordneten
Mikrocontrollers (11, QTPY)
und
Funkmodems (12) für eine Sprachkommunikation und/oder Datenkommunikation über ein Mobilfunknetz nach einem Mobilfunkstandard,
insbesondere einem Mobilfunkstandard der zweiten bis sechsten
Generation (2G (GSM), 3G (UMTS), 4G (LTE), 5G, und/oder 6G), vorgesehen ist.

2. Vorrichtung nach Anspruch 1, wobei auf der einteiligen oder mehrteiligen Leiterplatine (9, PCB)
wenigstens ein mit der Stromversorgungseinrichtung (10) verbundender bzw. verbindbarer Spannungswandler (13) für einen den Lautsprecher (7) und/oder das Mikrofon (6) mit elektrischer Energie versorgenden Verstärker (14, Amp),
wenigstens ein mit der Stromversorgungseinrichtung (10) verbundender bzw. verbindbarer Spannungswandler (15) für den Mikrocontroller (11, QTPY), und
wenigstens ein mit der Stromversorgungseinrichtung verbundender bzw. verbindbarer Spannungswandler für das Funkmodem (12) vorgesehen ist.

3. Vorrichtung nach Anspruch 2, wobei der Spannungswandler (13) für den den Lautsprecher (7) und/oder das Mikrofon (6) mit elektrischer Energie versorgenden Verstärker (14, Amp) eine Ausgangsspannung von 5,0 Volt und eine Stromstärke in einem Bereich von bis zu 2,0 Ampere bereitstellt.

4. Vorrichtung nach Anspruch 2 oder Anspruch 3, wobei der Spannungswandler (15) für den Mikrocontroller (11, QTPY) eine Ausgangsspannung von 5,0 Volt und eine Stromstärke in einem Bereich von bis zu 0,0455 Ampere bereitstellt.

5. Vorrichtung nach einem der Ansprüche 2 bis 4, wobei der Spannungswandler für das Funkmodem eine Ausgangsspannung in einem Bereich von 1,5 Volt bis 5,0 Volt, vorzugsweise von 1,8 Volt und 3,3 Volt, und eine Stromstärke in einem Bereich von bis zu 3,0 Ampere bereitstellt.

6. Vorrichtung nach einem der Ansprüche 2 bis 5, wobei ein Spannungswandler für den Mikrocontroller (11 OTPY) auch einen Spannungswandler für das Funkmodem (12) bereitstellt.

7. Vorrichtung nach einem der Ansprüche 1 bis 6, wobei Sprachkommunikation eine gegensprechfähige Sprachkommunikation ist.

8. Vorrichtung nach einem der Ansprüche 1 bis 7, wobei die Meldung eines akuten Notfalls oder einer Gefahr bzw. eine Sprachkommunikation mit einer hilfeleistenden Stelle mittels Push-to-talk over Cellular (PTToC, PoC bzw. PTT) erfolgt bzw. erfolgen kann.

9. Vorrichtung nach einem der Ansprüche 1 bis 8, wobei dem wenigstens einen, vorzugsweise als Tastschalter (3, 4, 5) ausgebildetem Bedienelement (3, 4, 5) zur manuellen Auslösung einer Meldung über einen Datenspeicher (16) eine eindeutige, über das Mobilfunknetz anwählbare Rufnummer zugeordnet bzw. zuordbar ist, welche bei Betätigung des Bedienelements (Knopf 1, Knopf 2, Knopf 3) von dem Funkmodem (12) für eine Kommunikationsverbindung genutzt ist bzw. nutzbar ist, wobei bei mehr als einem vorzugsweise als Tastschalter (3, 4, 5) ausgebildetem Bedienelement (3, 4, 5) zur manuellen Auslösung einer Meldung für jedes Bedienelement (3, 4, 5) im Datenspeicher (16) eine eigene eindeutige, über das Mobilfunknetz anwählbare Rufnummer zugeordnet bzw. zuordbar ist.

10. Vorrichtung nach Anspruch 9, wobei die eindeutige von dem Funkmodem über das Mobilfunknetz anwählbare Rufnummer im Datenspeicher (16) individuell einstellbar bzw. vorgebbar ist, vorzugsweise über das Mobilfunknetz.

11. Vorrichtung nach Anspruch 9 oder Anspruch 10, wobei der Datenspeicher (16) seitens des Mikrocontrollers (11, QTPY) und/oder seitens der einteiligen oder mehrteiligen Leiterplatine (9, PCB) vorgesehen ist.

12. Vorrichtung nach einem der Ansprüche 1 bis 11, wobei der wenigstens eine wiederaufladbare Speicher (10) für elektrische Energie der Stromversorgungseinrichtung (10) mit nur einer Ladung bzw. Aufladung einen Betrieb der Vorrichtung mit einer zeitlichen Dauer von mindestens drei bis fünf Jahren ermöglicht.

13. Vorrichtung nach einem der Ansprüche 1 bis 12, wobei der wenigstens eine wiederaufladbare Speicher (10) für elektrische Energie der Stromversorgungseinrichtung (10) ein sogenannter Industrieakkumulator oder ein IoT-Akkumulator ist.

14. Vorrichtung nach einem der Ansprüche 1 bis 13, wobei der wenigstens eine wiederaufladbare Speicher (10) für elektrische Energie der Stromversorgungseinrichtung (10) über das Mobilfunknetz überwachbar ist, vorzugsweise hinsichtlich Betriebsstatus, besonders bevorzugt hinsichtlich der verfügbaren Speicherkapazität.

15. Vorrichtung nach einem der Ansprüche 1 bis 14, wobei der Mikrocontroller (11, QTPY) in einem Bereitschaftsbetrieb betrieben bzw. betreibbar ist.
